Europäisches Patentamt

European Patent Office

Office européen des brevets

(11) Publication number: **0 198 562**
**A1**

(12) # EUROPEAN PATENT APPLICATION

(21) Application number: **86200634.3**

(22) Date of filing: **15.04.86**

(51) Int. Cl.⁴: **A 01 C 17/00**

(30) Priority: **16.04.85 NL 8501110**

(43) Date of publication of application: **22.10.86**
**Bulletin 86/43**

(84) Designated Contracting States: **DE FR GB NL**

(71) Applicant: **C. van der Lely N.V., Weverskade 10 P.O. Box 26, NL-3155 ZG Maasland (NL)**

(72) Inventor: **Van der Lely, Ary, 10A, Weverskade, NL-Maasland (NL)**
Inventor: **Bom, Cornelis Johannes Gerardus, 16, Laan van Nieuw Rozenburg, NL-Rozenburg (NL)**

(74) Representative: **Mulder, Herman et al, Octroolbureau Van der Lely N.V. Weverskade 10 P.O. Box 26, NL-3155 ZG Maasland (NL)**

(54) **An apparatus for spreading material.**

㊼ An apparatus for spreading material, comprising a frame and at least one spreader, the frame having coupling members (12, 13) by means of which the apparatus is coupable to the lifting device of a tractor on such like vehicle. A lifting trestle (16) is hingeably connectable to the coupling members (12, 13) and supporting pins (20) are provided near the coupling members to lift the apparatus by coupling the lifting arms to the supporting pins. By lifting the apparatus, the lifting trestle (16) will be brought in an operative position and then the lifting arms can be coupled to the lower of the trestle in the lifted position of the apparatus after detaching the lifting arms from the supporting pins.

EP 0 198 562 A1

- 1 -

An apparatus for spreading material.

The invention relates to an apparatus for spreading material, comprising a frame and at least one spreader member, the frame having coupling members by means of which the apparatus is couplable to the lifting device of a tractor or a such like vehicle.

It is an object of the invention to provide a simple construction for an apparatus of the above-defined type, the apparatus being couplable in an advantageous manner to the lifting device of a tractor or a such like vehicle.

According to the invention, this can be accomplished by hingeably fitting to the coupling members for the lifting arms at least a portion of a lifting trestle, supporting pins each having a projecting end to which a lifting arm of the lifting device can be coupled being provided near the coupling members to the frame.

The lifting trestle can be advantageously coupled to the apparatus when the lifting trestle portion is hingeably connected to the frame by means of pins, whereafter the lifting arms are coupled to the extending portions of the supporting pins and the apparatus is raised by means of the lifting arms until the portion of the lifting trestle is suspended at least substantially freely from the supporting pins and can then be secured to the frame, whilst thereafter the apparatus is lowered until the lifting trestle bears on the ground, whereafter the lifting arms are detached from the supporting pins or, in the reverse sequence, the lifting trestle can be removed from the apparatus. The inverse use of the method in accordance with the invention offers the possibility to detach the lifting trestle in a simple way from the apparatus.

For a better understanding of the invention and to show how it can be put into effect, reference will now be made, by way of example, to the accompanying drawings, in which:

Figure 1 is a side view of the apparatus according to the invention,

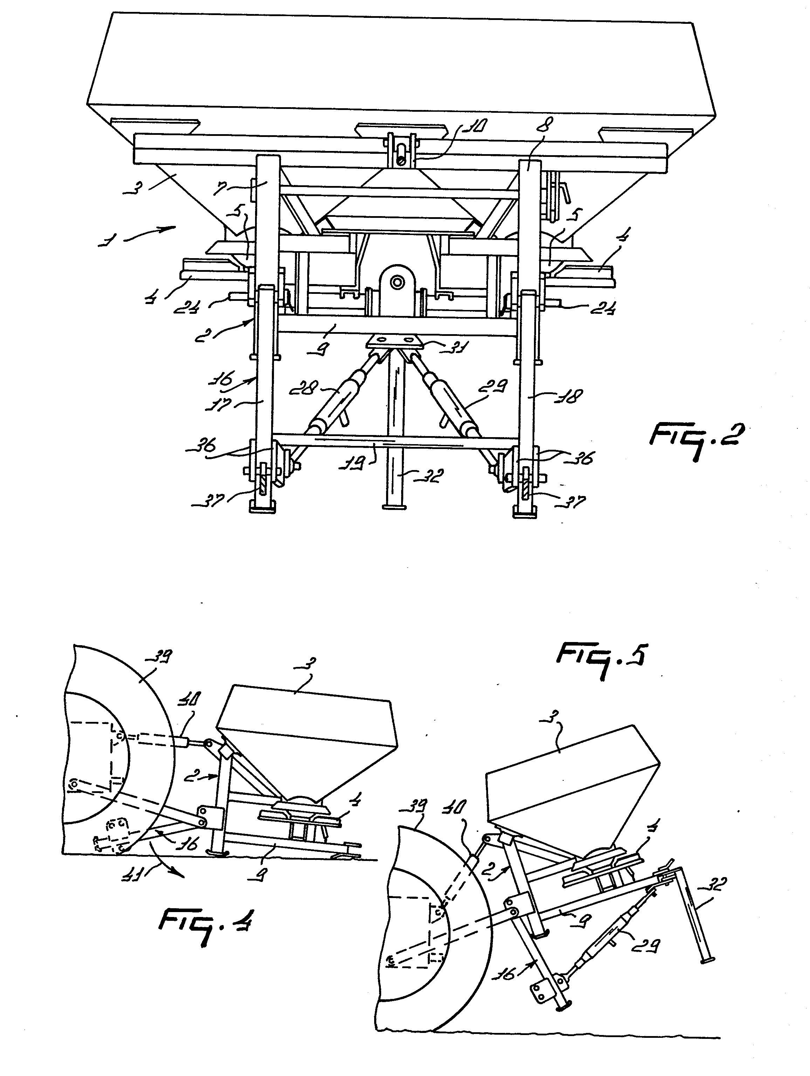

Figure 2 is a front view of the apparatus of Figure 1, taken in the direction of the arrow I in Figure 1,

Figure 3 illustrates, on an enlarged scale, the connection of a lifting trestle supporting beam to the frame of the apparatus,

Figure 4 is, on a reduced scale, a side view of the apparatus in a position in which the apparatus bears on the ground and the lifting trestle projecting from the frame is hingeably connected thereto,

Figure 5 is a side view of the apparatus in the lifted condition to enable fitting of the lifting trestle to the bottom side of the apparatus.

The apparatus 1 shown in the Figures is a spreader for spreading material. The apparatus 1 comprises a frame 2 which supports a hopper 3 and two spreader members 4. A doser mechanism 5 is disposed between the hopper 3 and each of the spreader members 4.

Relative to the intended direction of operative travel, the frame has, disposed at the front of the apparatus, two frame pillars 7 and 8, which are vertical when the apparatus is in a horizontal position, and a frame beam 9 extending rearwardly from these frame pillars. At its upper ends the frame is provided with lugs 10 by means of which the apparatus can be coupled to a top rod 11 of the lifting device of a tractor 39. Each frame pillar 7 and 8 is provided with lugs 12 and 13 disposed on facing sides of the frame pillars, as is shown more specifically in Figure 3 for the lugs and the pillar 8. The lugs 12 and 13 together form a coupling member.

A lifting trestle 16 is connected to the frame 1 for raising the spreader to a relatively great height above the ground. The lifting trestle comprises two vertical supporting pillars 17 and 18 which are coupled together near their bottom ends by means of an intermediate beam 19. The upper ends of the supporting pillars 17 and 18 are connected to the lugs 12 and 13 of the frame 2 by means of supporting pins 20. Each supporting pin 20 has a handle 21 with stop shoulders 22. The upper end of each of the supporting pillars 17 and 18 has a bushing 23 which is disposed with a tight fit between the spaced apart lugs 12 and 13 and has a hole through which the pin 20 is passed. Shifting of the pin 20 is prevented by a stop 25, for example a spring-loaded clip inserted in a hole 26 of the pin 20. The pin 20 has an extended portion 24 which, opposite the handle 21, projects to beyond the lug 13 and has a hole 27 through which a pin similar to pin 25 can be passed.

The supporting pillars 17 and 18 are provided near their bottom ends and near the back with connecting lugs 30. Bracing beams 28 and 29 are coupled to these lugs which have their other ends coupled to connecting lugs 31 near the rear of the frame beam 9.

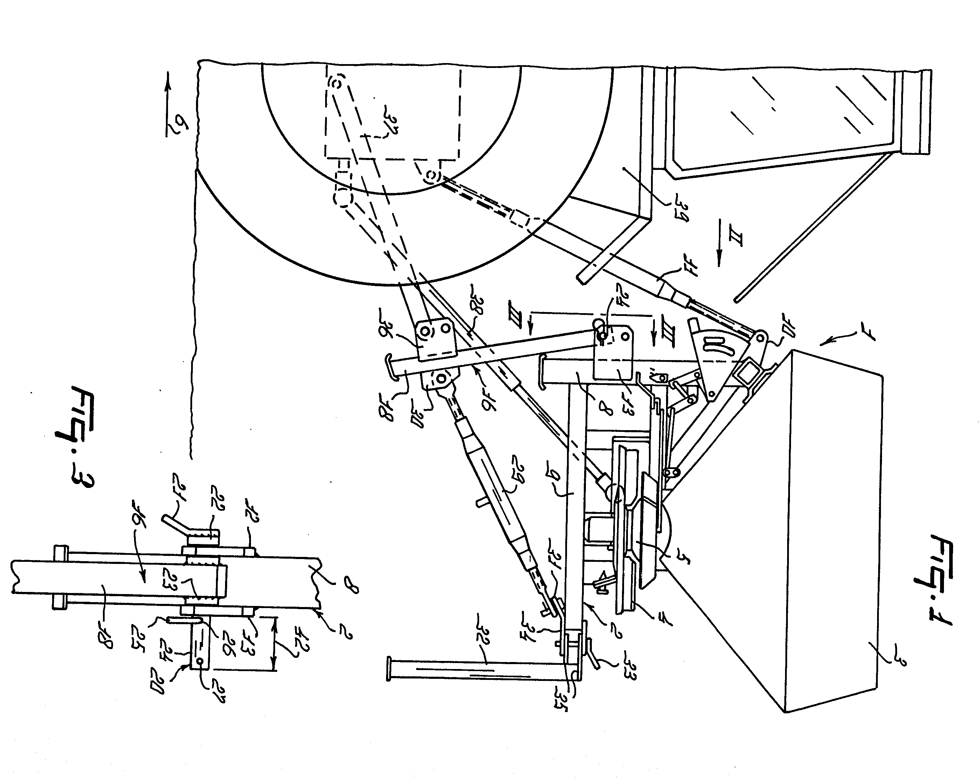

At their front ends and near their bottom ends, the supporting beams 17 and 18 are provided with lugs 36 which constitute coupling members with the aid of which the lifting arms of the lifting device can be coupled to a tractor, as is shown in Figure 1. The drive means, not shown, for the spreader members 4 can be coupled to the power take-off shaft of the tractor 39, as is shown in Figure 1.

The invention has for its specific object to spread material, for example fertilizer, over the land, coupled to and moved by the tractor. In this situation the material to be spread is carried along in the hopper 3 and is fed during operation to the spreader members 4 via the doser mechanism 5. The doser mechanism 5 can be adjusted such, that the desired quantity of material per unit of time can be fed to the spreader members from the hopper. During operation, the spreader members are caused to rotate by means of the p.t.o. shaft of the tractor via the intermediate shaft 38 and transmission members, not shown, so that the material fed thereto is thrown by the spreader members. The spreader members are caused to rotate around vertically extending rotary axes. Then, each spreader member will spread the material over the desired distance, to obtain a uniform spread pattern. Preferably, the spreader members are driven such and the supply of material to the spreader members is such, that each of the spreader members spreads the material over substantially the same area as the other spreader member.

Particularly for spreading material over crops which are already at a certain height above the ground, it is desirable to raise the spreader members to a considerable height above the ground or above the tops of the ground crops so as to enable spreading of the material over the intended width. To that end, the lifting trestle 16 is connected to the frame 1 of the apparatus, it being possible to connect the lifting arms to the lugs 36 of the lifting trestle 16, as is shown in Figure 1. As a result thereof, the apparatus can be raised to a considerable height above the ground by means of the lifting arms 37, the lugs 10 being connected to the tractor by means of the top rod 11. The supporting pillars 17 and 18 are locked against hinging around the supporting pins 20 by the presence of the bracing beams 28 and 29.

The apparatus can also be used without a lifting trestle, it being possible to detach the latter, including the supporting pillars 17, 18 and the bracing beams 28 and 29, from the frame 1, as can also be done with the supporting leg 32. After the lifting trestle has been removed from the frame, the lugs 12 and 13 can be coupled to the lifting arms, so that the apparatus can be used without lifting trestle, in a position in which the spreader members may be above the ground at a significantly lower distance for spreading the material over the land over the intended width during moving of the tractor and the apparatus. This situation will usually occur when crops are not yet above the ground or are so only to a limited extent.

Connecting the lifting trestle 16 to the apparatus can be effected in a simple way by one person. For that purpose, the apparatus with the lifting arms 37 and a short top rod 40 are coupled to the tractor in a manner shown in Figure 4. For this coupling operation the apparatus may bear on the ground. The lifting trestle portion formed by the intercoupled supporting pillars 17 and 18 is then connected hingeably to the lugs 12 and 13 by means of the supporting pin 20. The extended portions 24 of the supporting pins 20 projecting beyond the lugs 13 are then used to couple the lifting arms 37 thereto. Then a pin, similar to pin 25, is inserted in the hole 27 to prevent the lifting arms from getting detached from the extended portion 24. The supporting pillars 17 and 18 can then be coupled in a position extending in the forward direction from the pins 20, to the frame 2, as shown in Figure 4. From this position, the apparatus can be raised, the supporting pillars 17 and 18 rotating relative to the lugs 12 and 13 in a direction of the arrow 41 relative to the frame 2. The apparatus is lifted such that, approximately in the extension of the beams 7 and 8, the supporting pillars 17 and 18 will be suspended freely downwards from the lugs 12 and 13, at the pins 20. Thereafter the bracing beams 28 and 29 can be fitted by connecting them to the connection lugs 30 and 31. Thereafter the supporting leg 32 can be fastened to the lugs 34 with the aid of the coupling pin 33 so that a situation is obtained approximately as shown in Figure 5. Thereafter the apparatus having the lifting trestle 16 and the supporting leg 32 connected thereto, can be lowered until the bottom ends of the supporting pillars 17 and 18 bear on the ground and the apparatus with these supporting pillars and the supporting leg 32 can stand on the ground. Thereafter the lifting arms can be detached from the extended portions 24 of the supporting pins 20. The lifting

0198562

arms can then be lowered and be coupled to the lugs 36 of the lifting trestle 16. If necessary, the short top rod 40 can be replaced by a longer top rod 11, whereafter the apparatus is suitable for use in the situation in which it is coupled to the lifting arms 37 by means of the lugs 36 of the lifting trestle 16, as is shown in Figure 1. Inversely, the lifting trestle 16 and the supporting leg 32 can be detached from the frame of the apparatus with the object of using the apparatus without the lifting trestle and the supporting leg. Coupling or uncoupling, respectively of the lifting trestle 16 and the supporting leg 32 to and from the apparatus is facilitated by the presence of the extended portion 24 on the pin 20, which extension projects over a distance 42 from the lug 13, which distance is sufficiently great to permit locating of the width of the lifting arms 37 over the extended portion 24.

Although in this embodiment the extended portion is located at the exterior of the lug 13, it is inversely possible to pass the supporting pin 20 through the holes in the lugs 12 and 13 and the bushing 23, so that the extended portion projects into the interior of the beam 8 or outside the lug 12, respectively to enable coupling of the lifting arms 37 thereto.

The invention is not necessarily limited to the features described in the foregoing but also encompasses all the features shown in the drawings and apparent therefrom.

CLAIMS :

1.          An apparatus for spreading material, comprising a frame (2) and at least one spreader member (4) , the frame having coupling members (12, 13) by means of which the apparatus is couplable to the lifting device of a tractor or a such like vehicle, characterized in that at least a portion of a lifting trestle (16) is hingeably fitted to the coupling members for the lifting arms, supporting pins (20) each having a projecting end (24) to which a lifting arm (37) of the lifting device can be coupled being provided near the coupling members to the frame.

2.          An apparatus as claimed in claim 1, characterized in that the lifting trestle (16) comprises two intercoupled supporting pillars (17 and 18) whose upper ends are coupled to the coupling members of the frame by means of hinge pins (20) having extended projecting ends (24) forming supporting pins for the coupling arms.

3.          An apparatus as claimed in claim 2, characterized in that each of the upper ends of the supporting pillars (17 and 18) are disposed with a tight fit between the spaced apart lugs (12 and 13) of a coupling member and is coupled to these lugs by means of the hinge pins.

4.          An apparatus as claimed in any one of the preceding claims, characterized in that the supporting pins (20) each have a handle (21) and an extended portion (24), the extended portion having at least one hole (26) for accommodating a stop pin (25).

5.          A method of connecting or detaching, respectively at least a portion of a lifting trestle (16) to and from, respectively a frame of an apparatus as claimed in any one of the preceding claims, characterized in that the lifting trestle portion is hingeably connected to the frame by means of the supporting pins (20), whereafter the lifting arms (37) are coupled to the extended portions (24) of the supporting pins and the apparatus is raised by means of the lifting arms until the lifting trestle portion is suspended at least substantially freely from the supporting pins and can then be secured to the frame, whilst subsequent thereto the apparatus is lowered until the lifting trestle (16) bears on the ground whereafter the lifting arms (37) are detached from the supporting pins and are coupled to the lifting trestle (16) by means of connecting means (36) or, in an inverse sequence, the lifting trestle can be detached from the apparatus.

6. A method as claimed in claim 5, characterized in that a supporting leg (32) is fitted to the frame, whereafter the apparatus can be placed on the lifting trestle (16) free from the lifting device, and the supporting leg (32) can be placed on the ground.

7. A lifting trestle (16) and/or supporting leg (32) as claimed in any one of the preceding claims, clearly intended for use in an apparatus for spreading material.

8. An apparatus substantially as described hereinbefore and as shown in the drawings.

9. A method of connecting or detaching, respectively, a lifting trestle to or from a frame of an apparatus as claimed in any one of the claims 1 - 4, 7 or 8.

FIG.1

FIG.3

FIG.2

FIG.5

FIG.4

European Patent Office

**EUROPEAN SEARCH REPORT**

0198562

Application number

EP  86 20 0634

## DOCUMENTS CONSIDERED TO BE RELEVANT

| Category | Citation of document with indication, where appropriate, of relevant passages | Relevant to claim |
|---|---|---|
| X | FR-A-2 388 479  (DREYER)<br><br>* Page 8, paragraph 2 - page 10; figures 6-9 * | 1,3,5,<br>7,8 |
| | --- | |
| X | EP-A-0 134 603  (VAN DER LELY)<br><br>* Whole document * | 1-5,7-<br>9 |
| | --- | |
| A | DE-A-2 841 620  (NIEMEYER)<br><br>* Page 6 - page 10; figures 1-5 * | 2,3,5,<br>7 |
| | ----- | |

**CLASSIFICATION OF THE APPLICATION (Int. Cl.4)**

A 01 C   17/00

**TECHNICAL FIELDS SEARCHED (Int. Cl.4)**

A 01 C

The present search report has been drawn up for all claims

| Place of search | Date of completion of the search | Examiner |
|---|---|---|
| THE HAGUE | 23-07-1986 | VERMANDER R.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82